# EUROPÄISCHE PATENTSCHRIFT

(11) **EP 0 751 321 B1**
(45) Veröffentlichungstag und Bekanntmachung des Hinweises auf die Patenterteilung: **28.02.2001**
(21) Anmeldenummer: 96250141.7
(22) Anmeldetag: 28.06.1996
(51) Int. Cl.: F16H 57/04

(54) **Vorrichtung zur Verringerung der Ventilationsverluste eines schnellaufenden Zahnradgetriebes**
Device for reducing ventilation losses of high speed gearing
Dispositif à réduction des pertes par la ventilation d'une transmission tournant à grande vitesse

(30) Priorität: 29.06.1995 DE 19525102
(43) Veröffentlichungstag der Anmeldung: 02.01.1997
(73) Patentinhaber: Atecs Mannesmann AG, 40213 Düsseldorf (DE)
(72) Erfinder: Kock, Bernhard, 47269 Duisburg (DE)
(74) Vertreter: Presting, Hans-Joachim, Dipl.-Ing.

(56) Entgegenhaltungen:
- CH-B- 158 611
- DE-A- 4 321 655
- GB-A- 2 153 018
- US-A- 3 489 034
- US-A- 5 085 100

## Beschreibung

Die Erfindung betrifft eine Vorrichtung zur Verringerung der Ventilationsverluste eines schnellaufenden Zahnradgetriebes gemäß dem Gattungsbegriff des Hauptanspruches.

Die Leerlaufverlustleistung eines Getriebes setzt sich zusammen aus den Lagerleerlaufverlusten, den hydraulischen Verlusten und den Ventilationsverlusten. Die letztgenannten Verluste sind in Bezug auf die anderen Verluste erst bei Umfangsgeschwindigkeiten von 50 m/sec. und mehr von Bedeutung (Zeitschrift antriebstechnik 33 (1994) Nr. 9, Seiten 60 - 65). Zur Verringerung der Ventilationsverluste ist bereits vorgeschlagen worden (US-PS 3,489,034), an das luftdicht abgeschlossene Getriebegehäuse eine Vakuumpumpe anzuschließen und das Luft-Schmiermittelgemisch abzusaugen. Durch diese Anordnung wird zum einen der Ventilationsverlust verringert, die Geräusche der miteinander kämmenden Zahnräder reduziert und die Betriebstemperatur abgesenkt. Nachteilig ist der konstruktive Aufwand der Anordnung, sowie die Kosten für die Anschaffung und das Betreiben der Vakuumpumpe.

Eine gattungsgemäße Vorrichtung ist aus der US 5,085,100 B1 bekannt. Die Vorrichtung ist ein schnellaufendes Zahnradgetriebe mit mehreren in einem Getriebegehäuse angeordneten und miteinander kämmenden Zahnrädern. Zur Verringerung der Ventilationsverluste sind alle Zahnräder mit einem Mantel umgeben. wobei zur ungehinderten Zu- und Abfuhr der Luft und des Kühlmittels im Kämmungsbereich die Mantelumhüllung eine Öffnung aufweist. Das Schmiermittel wird außerhalb des Kämmungsbereiches durch eine Öffnung im Mantel eingespritzt, wobei die Öffnung so bemessen ist, daß das zugeführte Kühlmittel kurz nach der Einspritzstelle tangial wieder abspritzen kann. Auf diese Weise sollen die Verwirbelungsverluste durch das Kühlmittel gering gehalten werden. Die vollständige Ummantelung aller Zahnräder entspricht einem kleineren Getriebekasten innerhalb des tragenden Getriebegehäuses, wobei durch die Öffnungen in etwa gleiche Drücke innerhalb des Mantelbereiches als auch im Getriebegehäuse herrschen.

Die US-A-3 827 311 zeigt ein angetriebenes Großrad (langsamlaufend), wobei das treibende Ritzel über ein Lagergehäuse gekapselt ist.

Aufgabe der Erfindung ist es, eine Vorrichtung zur Verringerung der Ventilationsverluste eines schnelaufenden Zahnradgetriebes anzugeben, die einfach und kostengünstig herstelbr ist und die die sich einstelenden Druckverhältnisse im Zahneingriffs- und Ausgriffsbereich mit ausnutzt.

Diese Aufgabe wird mit den im kennzeichnenden Teil des Anspruches 1 angegebenen Merkmalen gelöst. Gegenüber dem bekannten Stand der Technik wird nicht das gesamte Getriebegehäuse evakuiert, sondern durch eine Einkapselung des Ritzels der im Verzahnungseingriff sich einstellende Unterdruck ausgenutzt. Dieser Unterdruck wird zwar nicht das Niveau des mit einer Vakuumpumpe erzeugbaren Vakuums erreichen, aber für die praktische Anwendung zur Verringerung der Ventilationsverluste ist dies ausreichend. Voraussetzung für die Erzeugung des gewünschten Unterdruckes ist die Abdichtung der stillstehenden Kapselung gegenüber dem umlaufenden Ritzel. Vorzugsweise weist dafür die Kapselung auf beiden Seitenbereichen einen Labyrinthabschnitt auf, der entweder mit dem verzahnungsfreien Wellenabschnitt des Ritzels oder mit einem darauf befestigten Druckkamm zusammenwirkt. Die Frage der Anordnung eines Druckkammes steht im Zusammenhang mit der Ausbildung der Lager für das Ritzel. Ist ein Lager als Axiallager ausgebildet, dann kann der Druckkamm entfallen.

Die Erzeugung des gewünschten Unterdruckes wird unterstützt, wenn im Zahnausgriffsbereich das Ende der Kapselung so ausgebildet ist, daß sich eine stetige Vergrößerung der nicht überdeckten Querschnittsfläche zwischen Ritzel und Großrad ergibt. Das in diesem Bereich tangential abspritzende Schmiermittel wirkt vergleichbar wie eine Wasserstrahlpumpe, vorausgesetzt, daß die Schmiermittelzuführung auf der Zahneingriffsseite angeordnet ist. Prinzipiell ist die Schmiermittelzuführung auch auf der Zahnausgriffsseite möglich, dies würde aber den erreichbaren Unterdruck verschlechtern.

Die vorzugsweise Teilung der Kapselung in einer Radialebene hat den Vorteil, daß man ohne Probleme nachträglich in ein bereits bestehendes Getriebe diese Abkapselung einbauen kann.

In der Zeichnung wird anhand eines Ausführungsbeispieles die erfindungsgemäße Vorrichtung näher erläutert.

Es zeigen:
- Figur 1: einen Querschnitt durch einen Teilbereich des Getriebes mit der erfindungsgemäßen Kapselung
- Figur 2: einen Schnitt A-A in Figur 1
- Figur 3: eine Ansicht in Richtung B-B in Fig. 2

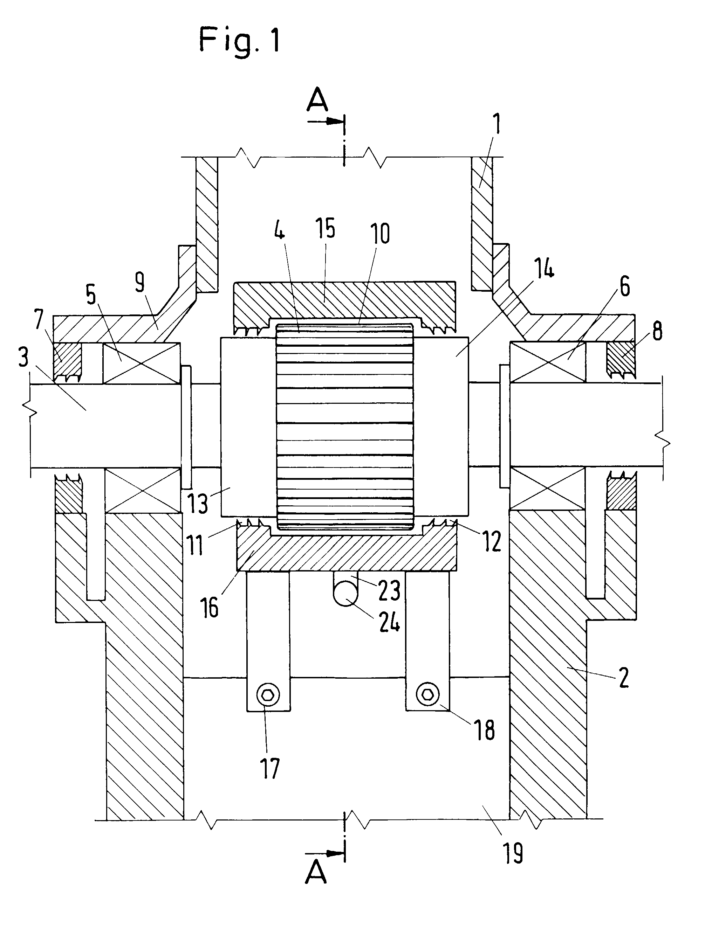

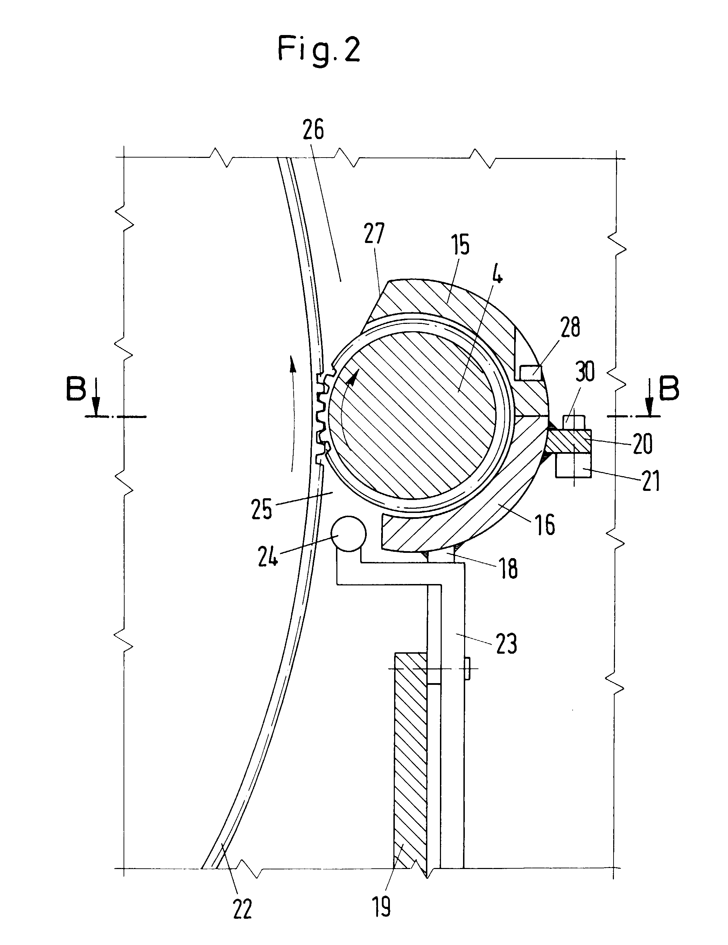

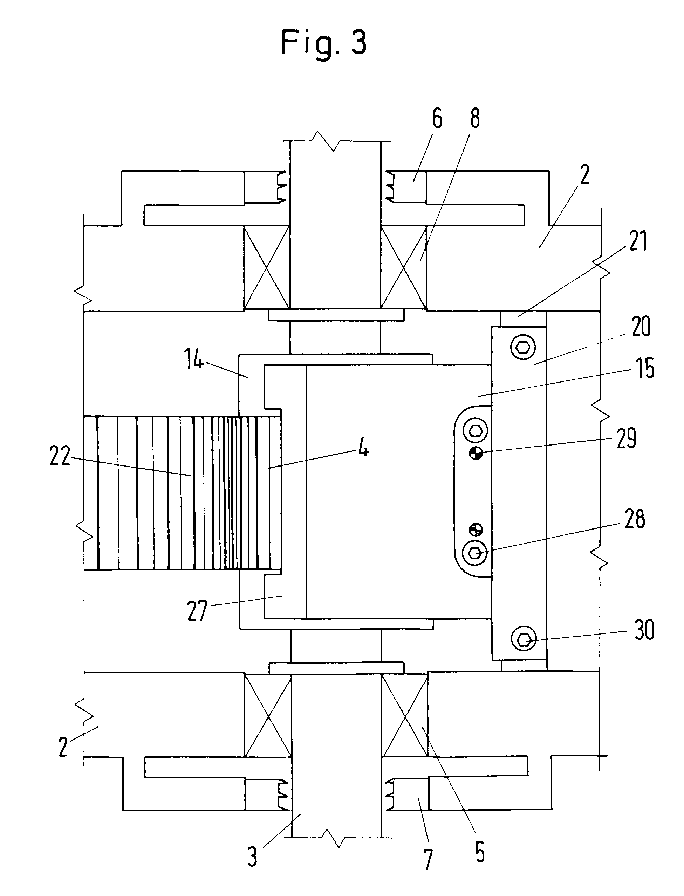

In Figur 1 ist in einem Querschnitt und in Figur 2 in einem Schnitt A-A in Fig. 1 sowie in Fig. 3 eine Ansicht in Richtung B-B in Fig. 2 ein Ausschnitt eines schnellaufenden Zahnradgetriebes mit der erfindungsgemäßen Vorrichtung zur Verringerung der Ventilationsverluste dargestellt. Das Getriebe ist angeordnet in einem Gehäuse, bestehend aus einem Getriebekastenoberteil 1 und einem Getriebekastenunterteil 2. Auf einer Welle 3 ist ein Ritzel 4 befestigt, wobei üblicherweise Welle 3 und Ritzel 4 aus einem Stück gefertigt sind. Die Lagerung der Welle 3 erfolgt auf zwei Lagern 5,6, wobei in diesem Ausführungsbeispiel beide als Axiallager ausgebildet sind. Für die Abdichtung der Welle 3 sind zwei Dichtungen 7,8 vorgesehen, die hier beispielsweise als Labyrinthdichtung ausgebildet sind. Je nach Anforderung und Betriebsbedingungen werden auch andere Dichtungsarten verwendet. Den Abschluß des Lagerraumes bildet ein Lagerdeckel 9, der am Getriebekastenoberteil 1 befestigt ist.

Erfindungsgemäß ist das Ritzel 4 eingekapselt und zwar so, daß der verbleibende Spalt 10 möglichst gering ist. Der mit dieser Einkapselung erzeugbare Unterdruck kann aber nur aufrechterhalten werden, wenn der gekapselte Raum abgedichtet ist. Dazu ist in den beiden Seitenbereichen der Abkapselung je ein Labyrinthabschnitt 11,12 angeordnet, der mit dem verzahnungsfreien Wellenabschnitt 13,14 des Ritzels 4 zusammenwirkt. Aus Gründen einer vereinfachten Montage ist die Abkapselung in einer Radialebene geteilt, so daß sie aus einem Oberteil 15 und einem Unterteil 16 besteht. Die Abstützung des Unterteils 16 erfolgt über Befestigungslaschen 17,18, die mit einem am Getriebekastenunterteil 2 befestigten Versteifungsblech 19 verschraubt sind. Zusätzlich ist das Unterteil 16 noch durch eine angeschweißte Pratze 20 mit einer am Getriebekastenunterteil 2 befestigten Lasche 21 über Schrauben 30 verbunden (Fig. 2).

Figur 2 zeigt im Schnitt A-A in Figur 1 den Eingriff des Ritzels 4 mit dem Großrad 22. Die Drehrichtung ist durch Pfeile gekennzeichnet. In dieser Darstellung kann man erkennen, daß die Schmiermittelzuführung mittels einer Leitung 23 und einer Ölbrause 24 im Zahneingriffsbereich 25 unmittelbar vor Beginn der Kapselung erfolgt. Das tangentiale Abspritzen des Schmiermittels im Zahnausgriffsbereich 26 wirkt unterstützend im Sinne der Erzeugung eines Unterdruckes. Zu dem gleichen Zweck ist der Endbereich 27 der Kapselung so ausgebildet, daß für die nicht überdeckte Querschnittsfläche sich eine stetige Vergrößerung ergibt, wenn man den Zahnausgriffsbereich 26 als Ursprung betrachtet. Die Verbindung des Oberteiles 15 der Kapselung mit dem Unterteil 16 erfolgt über Schrauben 28 und Paßstifte 29 (Figur 3).

## Patentansprüche

1. Vorrichtung zur Verringerung der Ventilationsverluste eines schnellaufenden Zahnradgetriebes mit einem Getriebegehäuse und miteinander kämmenden Zahnrädern, die mit einem sie umschließenden Mantel versehen sind und denen im Kämmbereich zur Verminderung der Reibung Schmiermittel zugeführt wird,
dadurch gekennzeichnet,
daß das Zahnradgetriebe in bekannter Weise aus einem Großrad (22) und einem damit kämmenden Ritzel (4) besteht und unter Ausnutzung des im Zahneingriffs- und Ausgriffsbereich sich selbsttätig einstellenden Druckes nur das Ritzel (4) im Bereich von mehr als 180° der Umfangserstreckung eingekapselt ist und im Zahnausgriffsbereich (26) das Ende (27) der Kapselung so gestaltet ist, daß sich eine stetige Vergrößerung der nicht überdeckten Querschnittsfläche zwischen Ritzel (4) und Großrad (22) ergibt und die Kapselung in Bezug auf den verzahnungsfreien Wellenbereich (14) des Ritzels (4) beidseitig abgedichtet ist und sich im verengenden Zahneingriffsbereich (25) von Großrad (22) und Ritzel (4) unmittelbar vor dem Anfang der Kapselung die Zuführleitung (23) für das Schmiermittel mündet.

2. Vorrichtung nach Anspruch 1,
dadurch gekennzeichnet,
daß auf den verzahnungsfreien Wellenabschnitten (14) des Ritzels (4) je ein Druckkamm angeordnet ist, der gegenüber der Kapselung abgedichtet ist.

3. Vorrichtung nach Anspruch 1 oder 2,
dadurch gekennzeichnet,
daß die Abdichtung zwischen der stillstehenden Kapselung und dem umlaufenden Ritzel (4) über einen Labyrinthabschnitt (11,12) der Kapselung erfolgt.

4. Vorrichtung nach Anspruch 1,
dadurch gekennzeichnet, daß die Kapselung in der Radialebene geteilt ist und jedes Teilelement (15,16) über Befestigungsmittel (28,29,30) mit dem Getriebegehäuse (1) verbunden ist.

## Claims

1. Device for reducing the ventilation losses of high-speed gearing with a gearbox and meshing gear wheels, which are provided with a casing surrounding them and to which lubricant is supplied in the meshing region to reduce friction,
characterised in
that the gearing consists in a known manner of a wheel (22) and a pinion (4), which meshes with the latter, and, utilising the pressure automatically arising in the tooth engagement and disengagement region, only the pinion (4) is enclosed over more than 180° of the circumferential extent, and the end (27) of the enclosure is formed in the tooth disengagement region (26) such that the non-covered cross-sectional area between the pinion (4) and the wheel (22) is steadily enlarged and the enclosure is sealed off on both sides in relation to the tooth-free shaft region (14) of the pinion (4), and the supply line (23) for the lubricant opens out in the narrowing tooth engagement region (25) of the wheel (22) and the pinion (4) immediately before the beginning of the enclosure.

2. Device according to Claim 1,
characterised in
that a respective pressure ridge formation is disposed on the tooth-free shaft portions (14) of the pinion (4), which pressure ridge formation is sealed off from the enclosure.

3. Device according to Claim 1 or 2,
characterised in
that the seal between the stationary enclosure and the rotating pinion (4) is effected by means of a labyrinth portion (11, 12) of the enclosure.

4. Device according to Claim 1,
characterised in
that the enclosure is divided in the radial plane, and each part-element (15, 16) is connected to the gearbox (1) via fastening means (28, 29, 30).

## Revendications

1. Dispositif pour diminuer les pertes de ventilation d'une transmission tournant à grande vitesse, comportant un carter de transmission et des roues dentées engrenant l'une avec l'autre, qui sont munies d'une enveloppe les entourant et auxquelles est amené un lubrifiant dans la zone d'engrènement pour diminuer le frottement,
caractérisé en ce que la transmission est constituée, de façon connue, d'une roue (22) et d'un pignon (4) engrenant avec celle-ci, et, en exploitant la pression se réglant automatiquement dans la zone d'engagement et de désengagement des dents, uniquement le pignon (4) est encapsulé dans une zone de plus de 180° de l'extension périphérique et, dans la zone de désengagement des dents (26), l'extrémité (27) de l'encapsulage est réalisée de sorte que l'on obtient une augmentation continue de la surface de section transversale non recouverte entre le pignon (4) et la roue (22) et l'encapsulage est étanchéifié des deux côtés relativement à la zone d'arbre non dentée (14) du pignon (4), et le conduit d'amenée (23) pour le lubrifiant débouche dans la zone d'engagement des dents (25) se rétrécissant de la roue (22) et du pignon (4) directement avant le début de l'encapsulage.

2. Dispositif selon la revendication 1,
caractérisé en ce que, sur les tronçons d'arbre non dentés (14) du pignon (4), il est agencé, à chaque fois, une garniture de pression qui est étanchéifiée par rapport à l'encapsulage.

3. Dispositif selon la revendication 1 ou 2,
caractérisé en ce que l'étanchéification entre l'encapsulage fixe et le pignon rotatif (4) est obtenue par l'intermédiaire d'un tronçon en labyrinthe (11, 12) de l'encapsulage.

4. Dispositif selon la revendication 1,
caractérisé en ce que l'encapsulage est divisé dans le plan radial et chaque élément partiel (15, 16) est relié, par l'intermédiaire de moyens de fixation (28, 29, 30), au carter (1) de la transmission.
